Europäisches Patentamt

European Patent Office

Office européen des brevets

(19)

(11) Publication number: **0 337 678**
**A2**

(12) **EUROPEAN PATENT APPLICATION**

(21) Application number: 89303464.5

(22) Date of filing: 07.04.89

(51) Int. Cl.⁴: **B60P 1/16**

(30) Priority: 11.04.88 IE 1080/88

(43) Date of publication of application:
18.10.89 Bulletin 89/42

(84) Designated Contracting States:
AT DE ES FR GB GR IT NL SE

(71) Applicant: **MANUS COFFEY ASSOCIATES LIMITED**
**Glendarragh Hill**
**Newtownmountkennedy County Wicklow(IE)**

(72) Inventor: **Coffey, Manus**
**Glendarragh Hill**
**Newtownmountkennedy County Wicklow(IE)**
Inventor: **Slack, Norman**
**Kiltipper Road**
**Tallaght Dublin 24(IE)**

(74) Representative: **Thiemann, Peter Albert William et al**
**LLOYD WISE, TREGEAR & CO. Norman House 105-109 Strand**
**London WC2R 0AE(GB)**

(54) **Transfer apparatus for a vehicle.**

(57) A vehicle (1) comprising transfer apparatus (3) for transferring a skip (2) from the ground to the vehicle (1) comprises a chassis (25) and side frames (46) on each side of the chassis (25). A lifting framework (45) having side members (53) joined by a cross member (54) is pivotally connected (55) to the side frames (46) and is pivoted by a pair of rams (56) for loading and unloading the skip (2). Engagement members (63) having slots (65,66) to engage pivot shafts (20) of the skip (2) extend from the side members (53). A latch (70) pivotal on the cross member (54) is selectively engagable with a receiver slot (21) in the skip (2) for retaining the skip (2) rigidly with the lifting framework (45) for tipping of the skip (2).

Fig 1

# TRANSFER APPARATUS FOR A VEHICLE

The present invention relates to transfer apparatus for mounting on a vehicle for transferring a skip of the type having a base and side walls and an upper open mouth from an upstanding position on the vehicle to the ground adjacent the vehicle. The invention also relates to a vehicle comprising the transfer apparatus.

Such skips and vehicles for transporting the skips will be known to those skilled in the art. The skips are used extensively for the transportation of waste material such as refuse, builders rubble and the like, and needless to say may be used for transporting any other materials. In general, skips of this type to which the transfer apparatus is directed comprise a base and a pair of spaced apart side walls extending upwardly from the base. Spaced apart front and end walls extend between the side walls and diverge upwardly outwardly from the base. At the top, the side and end walls terminate in a rim which defines an open mouth.

Vehicles for transporting such skips, in general, comprise a chassis on which the skip is supported. A pair of elongated upstanding side members are pivotally connected to the chassis, one on each side of the chassis. A top cross member extending between the side members over the skip carries four support chains which depend for releasably connecting to front and rear corners of the skip. The side members with the chains connected to the skip are pivoted in a generally rearward direction relative to the vehicle for transferring the skip from the chassis to the ground. Pivoting the side members in a forward direction transfers the skip from the ground to the bed of the vehicle.

These vehicles suffer from a number of disadvantages. In general, they are unsuitable for tipping a skip should one desire to discharge the contents of the skip. Attempts have been made to overcome this problem, however, none have been fully successful. One attempted solution to the problem has been to provide an arrangement whereby the skip pivots about a rear end of the chassis of the vehicle. This vehicle is provided with a hook extending upwardly from the rear end of the chassis of the vehicle to releasably engage the rear edge of the base of the skip. To tip the skip the side members are pivoted rearwardly, the skip being constrained by the hook engaging its rear base edge is forced to tip. Reverse pivoting of the side members return the skip to the bed of the vehicle. This arrangement suffers from two major disadvantages, firstly the pivotal movement of the skip to the tipped position is irregular. Since the chains are flexible, as the side members commence to pivot rearwardly, the skip is given an initial tipping movement, however, once the centre of gravity of the skip extends rearwardly of the rear edge of the base, the skip suddenly pivots under its own weight. This can have serious consequences, in that if a skip is of sufficient weight, the impact imparted to the vehicle as the skip pivots under its own weight may, depending on the load in the skip, be sufficient to overturn the vehicle. A second problem with this arrangement is that it requires a considerable amount of connections and disconnections to be made to the skip which requires the driver to dismount from the vehicle.

A further disadvantage of these vehicles is that in many cases the support chains become detached from the skip during transportation thereof and can swing freely. In other cases, should the vehicle be used without a skip in position, the support chains may swing freely as the vehicle travels along the road. In both cases, the freely swinging chains are a serious road hazard, since on cornering of the vehicle, the chains could swing outwardly and knock against another road vehicle or more seriously a cyclist, motorcyclist or the like.

There is therefore a need for a vehicle which comprises transfer apparatus for transferring a skip from the ground to the vehicle and vice versa which facilitates tipping of the skip. There is also a need for such transfer apparatus.

The present invention is directed towards providing such a vehicle and skip which overcome the problems of prior art devices. The invention is also directed towards providing transfer apparatus for transferring a skip from the ground to a vehicle and vice versa which overcomes the problems of known transfer apparatus.

The invention overcomes the problems of prior art devices by virtue of the fact that the invention provides transfer apparatus for mounting on a vehicle for transferring a skip of the type having a base and side walls and an upper open mouth from an upstanding position on the vehicle to the ground adjacent the vehicle, the transfer apparatus being of the type comprising a lifting member, first engagement means mounted on the lifting member for releasably engaging the skip, and mounting means for pivotally mounting the lifting member on the vehicle so that the lifting member is pivotal relative to the vehicle from a loaded position with the first engagement means engaging the skip on the vehicle to an unloaded position with the skip on the ground wherein the first engagement means pivotally engages the skip about a first pivot axis, the mounting means pivotally mounts the lifting member about a second pivot axis, the second pivot axis being parallel to and spaced apart from the first pivot axis, and second engagement means is mounted on the lifting member for selectively engaging the skip rigidly with the lifting member so that as the lifting member pivots from the loaded to the unloaded position the skip is tipped for discharging contents thereof.

The advantages of the invention are many. A particularly important advantage of the invention is that it provides transfer apparatus for transferring a skip from the ground to the vehicle which also facilitates tipping of the skip for discharging the contents thereof. A particularly important advantage of the invention is that the skip is tipped at a substantially uniform rate by virtue of the fact that the second engaging means rigidly engages the skip with the lifting member. A further advantage of the invention is that it provides transfer apparatus which is readily and easily used and is also safe to use. Another advantage of the invention is that the transfer apparatus can be operated by a driver of a vehicle without the need to dismount from the vehicle.

Preferably, the first engagement means and second engagement means are spaced apart from each other, and means for pivoting the lifting member from the loaded to the unloaded positions is provided.

The advantage of these features is that the skip may be positively secured to the lifting member without the danger of the skip disengaging the lifting member during tipping. By virtue of the fact that pivoting means are provided for pivoting the lifting member, the transfer apparatus may be operated without the need for the driver of the vehicle dismounting from the vehicle.

In another embodiment of the invention, the lifting member comprises a lifting framework which partly embraces the skip, the lifting framework comprising a pair of spaced apart side members for accommodating the skip therebetween, the side members being joined at one end by a cross member and pivotally engaging the mounting means at the other end, and the first engagement means being provided on the side members intermediate their ends.

The advantage of this feature of the invention is that it provides a relatively robust construction of transfer apparatus and also a construction of transfer apparatus which can be readily easily produced and produced at low relatively cost.

In a further embodiment of the invention, the side members. are cranked intermediate the first engagement means and the cross member, the cross member coinciding, in use, with a rim of the skip, the first engagement means comprising a pair of engagement members, an engagement member extending from a respective side member at an acute angle thereto to define with the side member a recess for the reception of a support means on the skip, and the second engagement means comprising a latch mounted on the cross member and selectively movable into and out of engagement with a corresponding receiver in the skip, and an abutment means is provided on the cross member for abutting the skip, the abutment means and first engagement means co-operating with each other to prevent disengagement of the skip from the first engagement means during tipping of the skip.

The advantage of this feature of the invention is that it provides a relatively robust construction of transfer apparatus, and furthermore, it provides transfer apparatus which is relatively safe to use. By virtue of the fact that the first engagement means are provided by engagement members rather than chains the danger of known transfer apparatus caused by ill-connected chains is avoided.

Additionally, the invention overcomes the problems of devices known heretofore by virtue of the fact that the invention provides a vehicle for transporting a skip of the type having a base and side walls and an upper open mouth, the vehicle being of the type comprising a chassis having a front and rear end, ground engaging wheels rotatably mounted on the chassis, and transfer apparatus for transferring the skip from an upstanding position on the vehicle to the ground adjacent the vehicle, the transfer apparatus comprising a lifting member, first engagement means mounted on the lifting member for releasably engaging the skip, and mounting means for pivotally mounting the lifting member on the vehicle about a pivot axis so that the lifting member is pivotal from a loaded position with the first engagement means engaging the skip on the vehicle to an unloaded position with the skip on the ground, wherein the first engagement means pivotally engages the skip about a first pivot axis, the mounting means pivotally mounts the lifting member about a second pivot axis, the first pivot axis and second pivot axis being spaced apart from each other and parallel to each other, and second engagement means are mounted on the lifting member for selectively engaging the skip rigidly with the lifting member so that as the lifting member pivots from the loaded to the unloaded position the skip is tipped for discharging contents thereof.

The advantages of the vehicle according to the invention are many. In particular, the invention provides a vehicle with transfer apparatus whereby as well as transferring a skip from the ground to the vehicle or vice versa, the transfer apparatus also may be used to tip the skip for discharging the contents thereof. A particularly important advantage of the invention is that by virtue of the invention, the skip when being tipped by the transfer apparatus is tipped at a substantially uniform rate.

Preferably, the first engagement means and second engagement means are spaced apart from each other, and means for pivoting the lifting framework from the loaded position to the unloaded position is provided.

The advantage of this feature of the invention is that it provides a relatively robust construction of vehicle and transfer apparatus and by virtue of the fact that the first and second engagement means are spaced apart, the skip and lifting member may be positively engaged without danger of disengagement during tipping of the skip. By virtue of the fact that pivoting means are provided to pivot the lifting member, the transfer apparatus of the vehicle can be operated remotely by a driver of the vehicle without the need for the driver to dismount from the vehicle.

In another embodiment of the invention, the mounting means comprises a pair of spaced apart side frames mounted one on each side of the chassis, the side frames extending forwardly from a position adjacent the rear end of the chassis, and the lifting member is provided by a lifting framework which partly embraces the skip, the lifting framework comprising a pair of spaced apart side members for accommodating the skip therebetween, the side members being joined at one end by a cross member, the other end of each side member pivotally engaging a respective side frame about the second pivot axis adjacent the rear of the side frames, the second pivot axis being transverse of the chassis and the lifting framework extending in a generally upward, forward direction relative to the chassis in the loaded position, and in a generally rearward direction in the unloaded position.

The advantage of this feature of the invention is that a relatively robust construction of vehicle and transfer apparatus is provided. Further, the vehicle and transfer apparatus can be produced readily easily and at relatively low cost.

Preferably, the second engagement means is provided by a latch mounted on the cross member selectively movable into and out of engagement with a corresponding receiver in the skip.

The advantage of this feature of the invention is that the transfer can be relatively easily operated by the driver of the vehicle, and in most cases can be operated by the driver of the vehicle without the need for the driver dismounting from the vehicle.

In another embodiment of the invention, the side members are cranked intermediate the first engagement means and the cross member so that the cross member in use coincides with an upper rim of the skip, and the first engagement means is provided by a pair of engagement members, an engagement member extending from a respective side member at an acute angle thereto to define with the side member a recess for reception of a support means on the skip.

The advantage of this feature of the invention is that a positive means for engaging the lifting member with the skip is provided and the lifting member and skip can be readily easily engaged and disengaged without the need for the driver dismounting of the vehicle. A further important advantage of this feature of the invention is that by virtue of the fact that the first engagement means is provided by engagement members, the need for chains for connecting the skip to the lifting member as has been the practice in prior art devices has been eliminated. Thus, the vehicle and transfer apparatus according to the present invention does not suffer from the disadvantages of prior art devices caused as a result of loosely mounted and ill-connected chains.

Further, the invention provides the combination of a vehicle according to the invention and a skip comprising a base and generally upwardly extending side walls, the skip having an upper open mouth, and support means being provided on a pair of opposite side walls for engaging the first engagement means, and receiver means is provided on the skip for receiving the second engagement means.

The advantage of this feature of the invention is that a relatively low cost combination of vehicle and skip can be produced and furthermore, the combination can be produced relatively easily and is further readily easily operated.

The invention will be more clearly understood from the following description of some preferred embodiments thereof, given by way of example only, with reference to the accompanying drawings, in which:

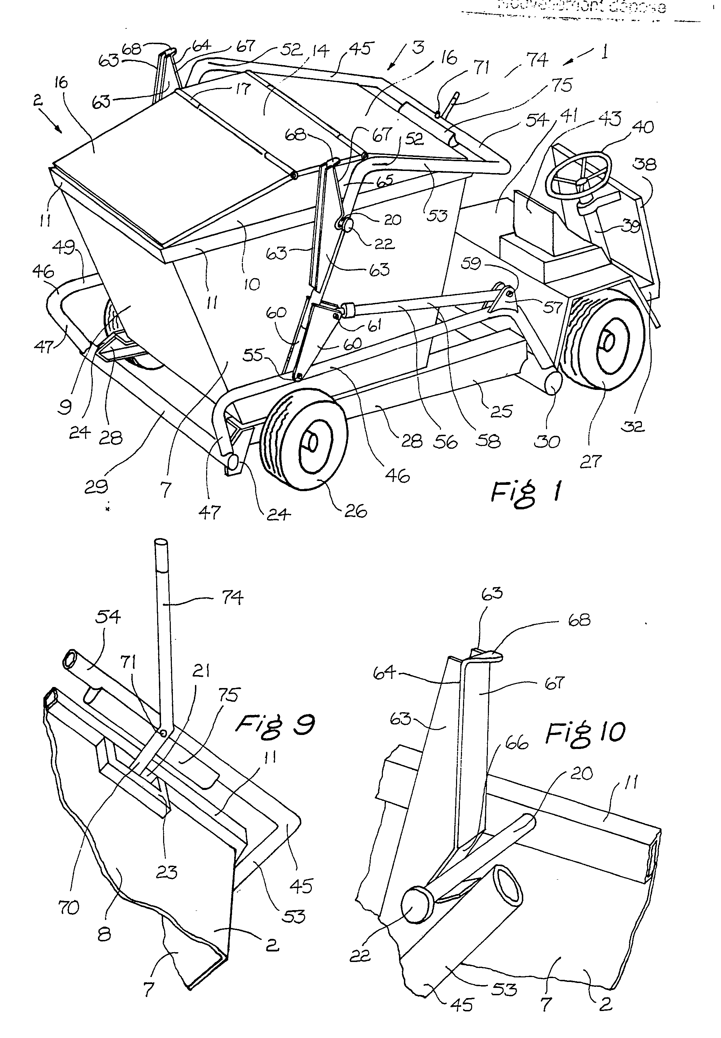

Fig. 1 is a perspective view of a vehicle according to the invention for transporting a skip,

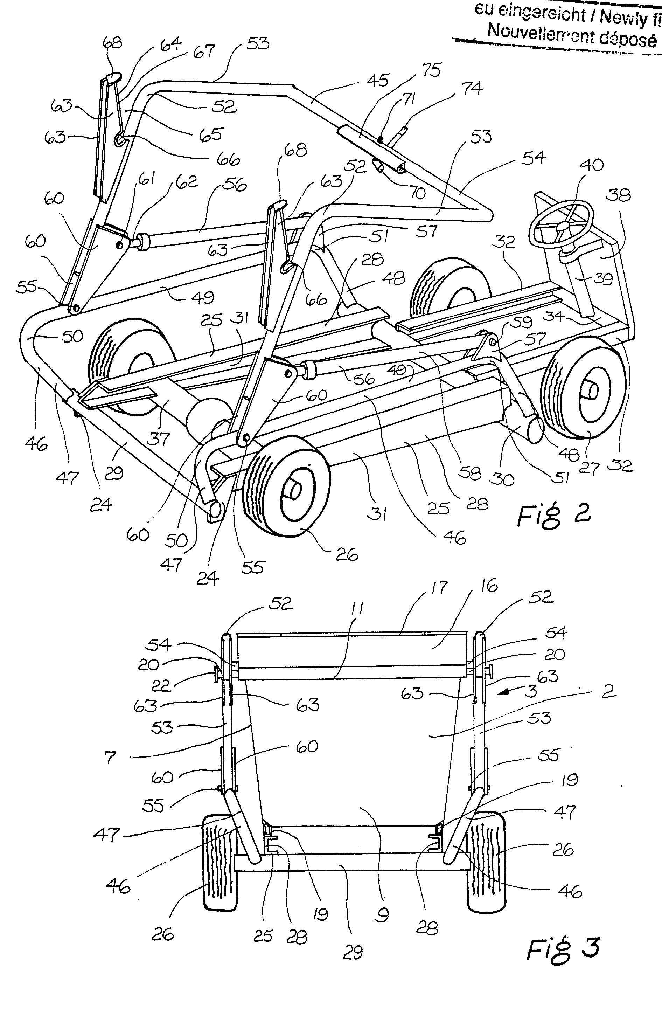

Fig. 2 is a perspective view of the vehicle of Fig. 1 with portion of the vehicle removed,

Fig. 3 is an end elevational view of the vehicle of Fig. 1,

Fig. 4 is a side elevational view of the vehicle of Fig. 1 in one position,

Fig. 5 is a view similar to Fig. 4 with the vehicle in a different position,

Fig. 6 is a side elevational view of the vehicle similar to Fig. 4 in a still further different position,

Fig. 7 is a side elevational view similar to Fig. 4 of the vehicle in a still further different position,

Fig. 8 is a perspective view of a skip for use with the vehicle of Fig. 1,

Fig. 9 is a perspective view of a detail of the vehicle of Fig. 1,

Fig. 10 is a perspective view of a further detail of the vehicle of Fig. 1, and

Fig. 11 is a perspective view of a vehicle according to another embodiment of the invention.

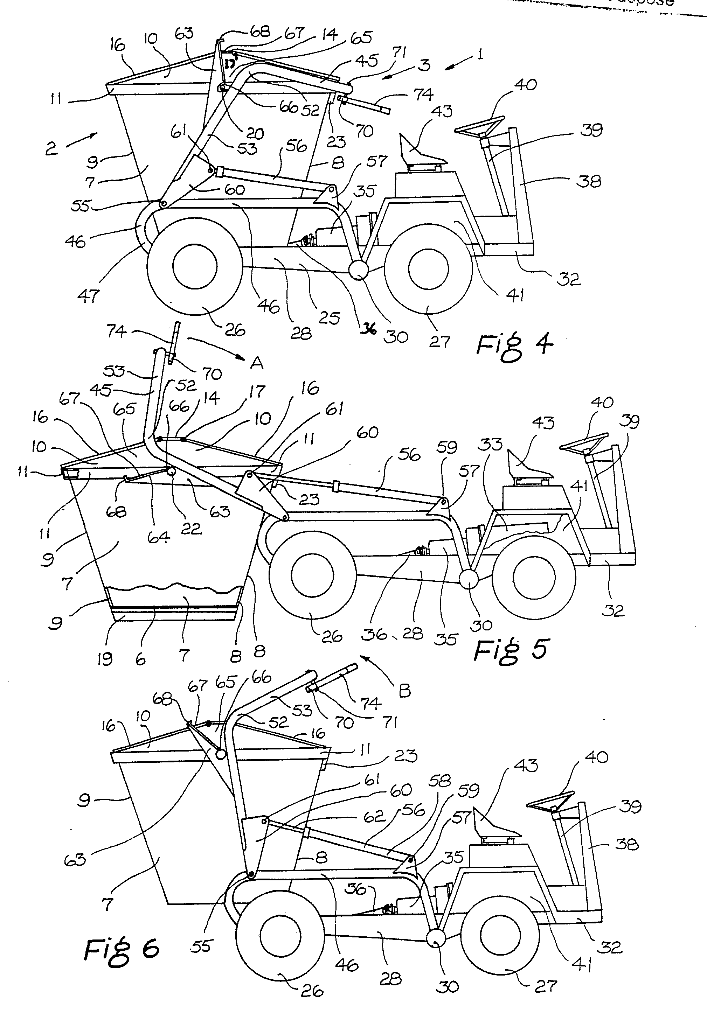

Referring to the drawings, there is illustrated a vehicle according to the invention indicated generally by the reference numeral 1 for transporting a skip indicated generally by the reference numeral 2 also according to the invention. The vehicle 1 comprises transfer apparatus indicated generally by the reference numeral 3 also according to the invention for transferring the skip 2 from a loaded position on the vehicle 1 as illustrated in Fig. 4 to an unloaded position on the ground adjacent the vehicle as illustrated in Fig. 5. Before describing the vehicle and transfer apparatus in detail, the skip 2 will first be described.

The skip 2 is of metal plate material comprising a base 6, side walls 7 and upwardly, outwardly diverging front and rear walls 8 and 9 respectively. The side walls 7, front and end walls 8 and 9 terminate in a rim 11 of box section construction. Upper side walls 10 extend upwardly from the rim 11. A cross member 14 of metal plate extends between the upper side walls 10 and forms with the side walls 10 and portion of the rim 11 a pair of open mouths 12. A pair of closure members, namely, doors 16 hinged at 17 to the cross member 14 close the open mouths 12. The base 6 and side walls 7 are shaped to form lower reinforcing runners 19 extending on each side of the base 6. A pair of support means, namely pivot shafts 20 extend at each side of the skip 2 from the rim 11 for engagement with the transfer apparatus 3, as will be described below. The pivot shafts 20, as can be seen, are positioned well above the centre of gravity of the skip 2 and are substantially centrally located between the front and rear walls 8 and 9. Stop discs 22 are located at the ends of the shafts 20. A receiver means, namely, a slot 21 is provided in a bracket 23 welded to the rim 11 nad the front wall 8 for engagement with the transfer apparatus 3 as will be described below.

The vehicle 1 comprises a chassis 25 supported on ground engaging wheels, namely a pair of rear driven wheels 26 and front steerable wheels 27. The chassis 25 comprises a pair of rear side members 28 joined by a rear cross member 29 and an intermediate cross member 30 of torsionally stiff hollow circular section steel. The rear side members 28 are of channel shaped construction, the centre webs 31 of which taper towards the rear. The rear cross member 29 is of hollow circular section steel material and is secured to brackets 24 which are in turn secured to the side members 28. A pair of front side members 32 also of channel section steel are welded to and extend from the intermediate cross member 30 and support an engine 33 shown in block representation in Fig. 5 for driving the vehicle 1. A front member 34 of channel section steel joins the front side members 32. A gear box 35 connected to the engine 33 and a drive shaft 36 extending from the gear box 35 transmit drive from the engine 33 to a back axle 37 for driving the drive wheels 26. A support member 38 extending upwardly from the front member 34 supports a steering column 39 and a steering wheel 40 connected through a linkage (not shown) to the steerable whels 27. A housing 41 mounted on the front side members 32 supports a seat 43 for a driver.

The transfer apparatus 3 comprises a lifting member in this case provided by a lifting framework 45 pivotally mounted relative to the chassis by mounting means provided by a pair of side frames 46 mounted on each side of the chassis 25 adjacent the rear side members 28. Each side frame 46 is formed of bent hollow circular section steel, and comprises a rear member 47 and a front member 48 joined by a side member 49. The side member 49 is joined to the rear and front members 47 and 48 by radiused portions 50 and 51 respectively. The rear members 47 are secured to the rear cross member 29 while the front members 48 are secured to the intermediate cross member 30. The lifting framework 45 is also of hollow circular section steel and comprises a pair of side members 53 cranked at 52 and joined at one end by a cross member 54 which embrace the skip 2. The other end of the side members 53 are welded to pairs of plate brackets 60 which are pivotally connected to the side members 49 of the side frames 46 by pivot pins 55 adjacent the rear end of the chassis 25. The pivot pins 55 define a second pivot axis which is transverse of the chassis 25. The lifting framework 45 is pivoted by pivoting means, in this case provided by a pair of hydraulic rams 56 from the loaded position illustrated in Fig. 4 with the skip 2 mounted on the chassis 25 of the vehicle 1 to the unloaded position illustrated in Fig. 5 with the skip 2 on the ground. Pairs of brackets 57 mounted on each side frame 46 pivotally engage housings 58 of the rams 56 by pivot pins 59. Piston rods 62 of the rams 56 pivotally engage the brackets 60 by pivot pins 61.

First engagement means provided by pairs of engagement members 63 of metal plate material are welded to the side members 53 of the lifting framework 45 for releasably and pivotally engaging the pivot shafts 20 of the skip 2. The engagement members define an edge 64 which extends at an acute angle to the side members 53 to form a recess 65 for engaging the pivot shafts 20. A slot 66 into each engagement member 63 at the end of the recess 65 positively locates the pivot shafts of the skip 2 in the recess 65 as will described below. Flat metal strips 67 are welded along the edge 64 and slot 66 of the engagement members 63 to form a bearing surface for the pivot shafts 20. The free ends of the strips 67 are bent upwardly to form stops 68 to prevent the pivot shafts 20 disengaging the engagement member 63 on the lifting framework 45 being pivoted from the unloaded position of Fig. 5 to the loaded position of Fig. 4 as will be described below. When the skip 2 is in the loaded position resting on the chassis 25, the pivot shafts 20 of the skip 2 are engaged in the slots 66. These slots 66 define a first pivot axis about which the skip is pivotal as the lifting framework 45 pivots from one position to the other position. The first pivot axis defined by the slots 66 is parallel to and spaced part from the second pivot axis about which the lifting framework 45 pivots relative to the side frames 46. The pivot axes of the slots 66 and the pivot pins 55 are spaced apart a sufficient distance so that the skip 2 on being pivoted from the loaded to the unloaded position and vice versa clears the rear end of the chassis 25.

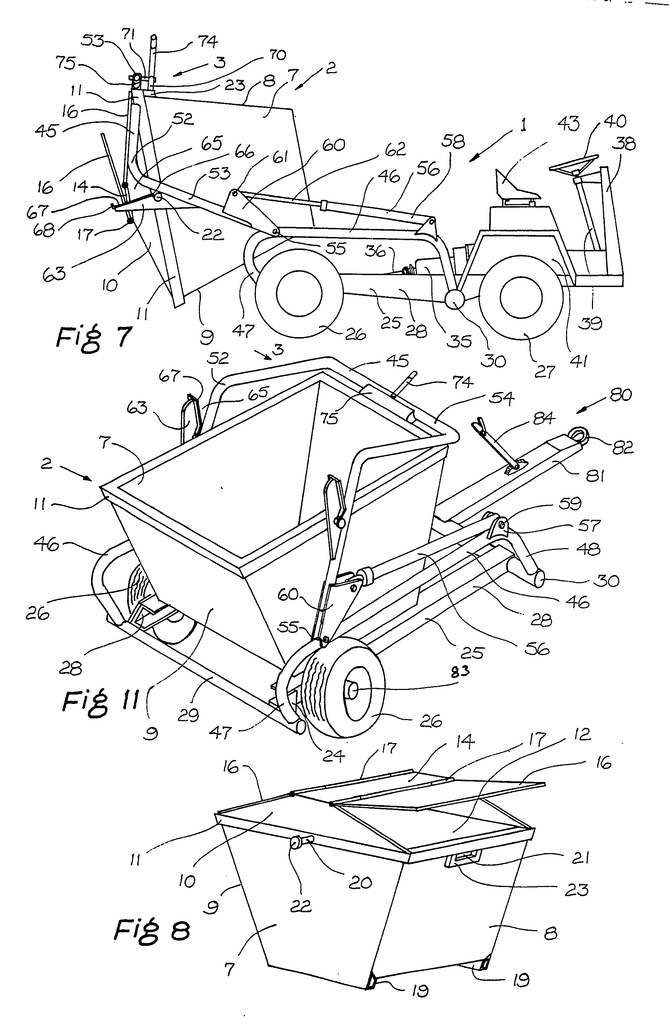

Because the side members 53 are cranked at 52 the cross member 54 substantially co-incides with the rim 11 extending across the front wall 8 of the skip 2. Second engagement means for selectively engaging the skip 2 is provided by a latch 70 pivotally mounted on a pivot pin 71 through the cross member 54. The latch 70 engages the corresponding receiver slot 21 in the skip 2 to rigidly engage the skip 2 with the lifting framework 45 when the lifting framework 45 is pivoting from the loaded position of Fig. 4 to the unloaded position of Fig. 7 for tipping of the skip to discharge the contents thereof. A lever 74 extends from the latch 70 to facilitate pivoting of the latch 70. The lever 74 is provided substantially behind the position which a driver would occupy on the seat 43 so that a driver can selectively engage and disengage the latch 70 in the receiver slot 21 by merely reaching behind him while still remaining in position on the seat 43.

An abutment means provided by an abutment member 75 mounted on the cross member 54 abuts the rim 11 on the front wall 8 of the skip 2, and acts in co-operation with the slots 66 in the engagement members 63 to retain the skip 2 in the slot 66 during pivoting of the lifting framework 45 while the latch 70 engages the skip 2 for tipping. As can be seen, by virtue of the fact that the abutment member 75 engages the rim 11, movement of the pivot shafts 20 out of the slots 66 is prevented while the skip 2 is rigidly engaged with the lifting framework 45.

Mounting brackets (not shown) are provided on the front member 34 for mounting a ballast member onto the front of the vehicle to prevent the vehicle 1 pivoting rearwardly about the back axle during tipping, loading or unloading of the skip 2 on the vehicle 1. Ground engaging jacks (also not shown) are mounted on the rear cross member 29 which may be extended to engage the ground, likewise to stabilise the vehicle 1 during tipping, unloading or loading of the skip 2 on the vehicle 1.

Hydraulic oil is delivered to the hydraulic rams 56 through hydraulic hoses (not shown) from a hydraulic pump (also not shown) driven by the engine 33.

Suitable foot and hand controls (not shown) are provided at the front of the vehicle 1 for driving the vehicle. Suitable controls are also provided in the front of the vehicle accessible to the driver for operating the rams 56. Such controls will be well known to those skilled in the art.

In use, to engage a skip 2 for lifting onto the vehicle 1, the lifting framework 45 is pivoted in a generally rearward direction into the unloaded position of Fig. 5 by extending the rams 56. The vehicle is aligned with the skip 2 to be lifted and reversed so that the skip 2 is embraced by the side members 53. The vehicle 1 is then further reversed until the pivot shafts 20 of the skip 2 are located in the recesses 65 just above the slots 66 of the engagement brackets 63. As can be seen, the engagement members 63 are so arranged that when the lifting framework 45 is in the unloaded position the stops 68 pass beneath the pivot shafts 20 of the skip 2. The lifting framework 45 is then pivoted in the direction of the arrow A by the rams 56 thereby engaging the pivot shafts 20 in the slots 66 of the engagement brackets 63. The lifting framework 45 is further pivoted into the loaded position illustrated in Fig. 4. In this position, as can be seen, the lifting framework 45 extends in a generally forward direction from the pivot pins 55. In the loaded position, the pivot shafts 20 engage the slots 66 and the base 6 of the skip 2 rests on the chassis 25. The skip 2 may then be transported on the vehicle 1.

Should it be desired to unload the skip 2, the lifting framework 45 is pivoted in the reverse direction, namely the direction of the arrow B until it is in the unloaded position illustrated in Fig. 5 with the skip on the ground. The vehicle 1 is then driven forwardly so that the engagement members 63 disengage the pivot shafts 20 of the skip 2.

On the other hand, if it is desired to tip the skip 2 for discharging the contents therefrom, the driver, by reaching behind him, pivots the latch 70 using the lever 74 into engagement with the receiver slot 21 of the skip 2 when in the loaded position of Fig. 4. Thereby the skip 2 is rigidly engaged in the lifting framework 45. The lifting framework 45 is then pivoted by extending the rams 56 into the unloaded position of Fig. 7. As can be seen in Fig. 7, the skip 2, instead of being deposited on the ground, is tipped for discharging the contents therefrom. Retracting the rams 56 pivots the lifting framework 45 back into the loaded position with the skip 2 on the chassis 25. When it is desired to deposit the skip 2 on the ground, the latch 70 is disengaged from the receiver slot 21 by means of the lever 74 and the lifting framework 45 is again pivoted into the unloaded position by extending the rams 56.

Referring now to Fig. 11 there is illustrated a vehicle indicated generally by the reference numeral 80 according to another embodiment of the invention also for transporting a refuse skip 2. In this case, the vehicle 80 is substantially similar to the vehicle 1 and similar components are identified by the same reference numeral. The main difference between this vehicle 80 and the vehicle 1 is that the vehicle 80 is suitable for trailing behind a suitable towing vehicle, for example a tractor, truck, lorry, jeep or the like. The transfer apparatus 3 is substantially identical to the transfer apparatus 3 of the vehicle 1 and similar components are identified by the same reference numeral. The main difference is that the front portion of the chassis is formed by a drawbar 81 of channel section steel extending forwardly from the intermediate cross member 30. The drawbar 81 carries a towing eye 82 for engaging the towing vehicle. The back axle 37 in this case is replaced by a towing axle (not shown) mounted on the rear side members 28 of the chassis 25. A lever 84 mounted on the drawbar 81 operates a cable (not shown) for operating the brakes (also not shown) in the ground engaging wheels 26. Hydraulic hoses (not shown) deliver hydraulic fluid to the rams from a hydraulic source and controls (neither of which are illustrated) mounted in the towing vehicle (also not shown).

Otherwise, operation of the vehicle 80 is similar to that of the vehicle 1.

The vehicle and transfer apparatus and skip are particularly suitable for the transportation of waste material, such as, for example, refuse, builders rubble and the like. It is also envisaged that the vehicle, transfer apparatus and skip may be used for transferring any other types of material. For example, it is envisaged that the skip may be used for storing and transporting agricultural and horticultural produce, industrial components and products. Indeed, in certain cases it is envisaged that the skip may be used for the storing and transportation of liquid materials.

While specific construction of vehicles have been described, other suitable constructions could be provided without departing from the scope of the invention. Further, it will be appreciated that other constructions of lifting framework could be used. Needless to say, other suitable mounting means for mounting the lifting framework to the chassis of the vehicle could similarly be used. It will be readily apparent to those skilled in the art that the side frames could be dispensed with. Indeed, in certain cases, it is envisaged that the lifting framework may be pivotally mounted directly to the chassis. Further, it is envisaged that the lifting framework could be of other suitable construction. Indeed, in certain cases, it is envisaged that the cross member may be dispensed with. Indeed, in certain cases the lifting framework could be provided by a single lifting member which would be pivotally connected to the chassis.

Further, it will be appreciated that other suitable constructions of first engagement means could be used without departing from the scope of the invention. Indeed, in certain cases, it will be appreciated that the first engagement means may be provided by a pivot shaft which would engage a corresponding receiver in the skip.

It is also envisaged that other construction of second engagement means may be used besides an engagement latch. Indeed, in certain cases, it is envisaged that the second engagement means could be provided in the first engagement means whereby a clamp arrangement would be provided in the first engagement means to clamp the pivot shaft of the skip to the lifting framework, thereby preventing the skip pivoting relative to the lifting framework.

Alternatively, if the first engagement means were provided by a pivot shaft, a clamp arrangement could be provided adjacent the pivot shaft to prevent pivoting of the skip.

Thus, it will be appreciated that in certain cases it is envisaged that the second engagement means need not be spaced apart from the first engagement means. Needless to say, where the second engagement means is provided by a latch, the latch could engage any other appropriate part of the skip.

Further, it will be appreciated that other constructions of first engagement means may be provided. For example, in certain cases it is envisaged that the first engagement means may be provided by a pivot member or members, such as, for example, a pair of stub shafts which would engage corresponding recesses or openings in the skip. It will also be appreciated that other constructions of latch may be provided as the second engagement means, and in certain cases it is envisaged that the second engagement means may be provided as a receiver which will engage a corresponding latch or other projection from the skip.

It is also envisaged that while it is preferable that the first engagement means should engage the skip above the centre of gravity, in certain cases, it is envisaged that the first engagement means may engage the skip coincident with the centre of gravity. Further, while it is preferable, it is not essential that the first engagement means should engage the skip centrally between its front and back walls.

Needless to say, other suitable pivoting means besides hydraulic rams may be used for pivoting the lifting framework relative to the vehicle. Indeed, in certain cases a winch and pulley arrangement could be used, a pneumatic ram, an electrically powered solenoid or any other suitable drive means. In fact, in certain cases it is envisaged that the lifting frame may be pivoted by a hand operated mechanism.

While the transfer apparatus according to the invention has been described as being mounted on a vehicle of particular construction, the transfer apparatus could be provided on any other type of vehicle, and indeed the transfer apparatus may be provided on its own for subsequently mounting on a vehicle without departing from the scope of the invention.

It will of course be appreciated that other constructions of skip could be provided and used with the transfer apparatus without departing from the scope of the invention.

Needless to say, the abutting member in certain cases may be dispensed with.

## Claims

1. Transfer apparatus (3) for mounting on a vehicle (1) for transferring a skip (2) of the type having a base (6) and side walls (7,8,9) and an upper open mouth (12) from an upstanding position on the vehicle (1) to the ground adjacent the vehicle (1), the transfer apparatus (3) being of the type comprising a lifting member (45), first engagement means (63) mounted on the lifting member (45) for releasably engaging the skip (2), and mounting means (46) for pivotally mounting the lifting member (45) on the vehicle (1) so that the lifting member (45) is pivotal relative to the vehicle (1) from a loaded position with the first engagement means (63) engaging the skip (2) on the vehicle (1) to an unloaded position with the skip (2) on the ground characterised in that the first engagement means (63) pivotally engages the skip (2) about a first pivot axis, the mounting means (46) pivotally mounts the lifting member (45) about a second pivot axis, the second pivot axis being parallel to and spaced apart from the first pivot axis, and second engagement means (70) is mounted on the lifting member (45) for selectively engaging the skip (2) rigidly with the lifting member (45) so that as the lifting member (45) pivots from the loaded to the unloaded position the skip (2) is tipped for discharging contents thereof.

2. Transfer apparatus as claimed in Claim 1 characterised in that the first engagement means (63) and second engagement means (70) are spaced apart from each other, and means (56) for pivoting the lifting member (45) from the loaded to the unloaded positions is provided.

3. Transfer apparatus as claimed in Claim 1 or 2 characterised in that the lifting member (45) comprises a lifting framework (45) which partly embraces the skip (2), the lifting framework (45) comprising a pair of spaced apart side members (53) for accommodating the skip (2) therebetween, the side members (53) being joined at one end by a cross member (54) and pivotally engaging the mounting means (46) at the other end, and the first engagement means (63) being provided on the side members (53) intermediate their ends.

4. Transfer apparatus as claimed in Claim 3 characterised in that the side members (53) are cranked (52) intermediate the first engagement means (63) and the cross member (54), the cross member (54) coinciding, in use, with a rim (11) of the skip (2), the first engagement means (63) comprising a pair of engagement members (63), an engagement member (63) extending from a respective side member (53) at an acute angle thereto to define with the side member a recess (65) for the reception of a support means (20) on the skip (2), and the second engagement means (70) comprising a latch (70) mounted on the cross member (54) and selectively movable into and out of engagement with a corresponding receiver (21) in the skip (2), and an abutment means (75) is provided on the cross member (54) for abutting the skip (2), the abutment means (75) and first engagement means (63) co-operating with each other to prevent disengagement of the skip (2) from the first engagement means (63) during tipping of the skip (2).

5. A vehicle (1) for transporting a skip (2) of the type having a base (6) and side walls (7,8,9) and an upper open mouth (12), the vehicle (1) being of the type comprising a chassis (23) having a front (34) and rear end (29), ground engaging wheels (26,27) rotatably mounted on the chassis (23), and transfer apparatus (3) for transferring the skip (2) from an upstanding position on the vehicle (1) to the ground adjacent the vehicle (1), the transfer apparatus (3) comprising a lifting member (45), first engagement means (63) mounted on the lifting member (45) for releasably engaging the skip (2), and mounting means (46) for pivotally mounting the lifting member (45) on the vehicle (1) about a pivot axis so that the lifting member (45) is pivotal from a loaded position with the first engagement means (63) engaging the skip (2) on the vehicle (1) to an unloaded position with the skip (2) on the ground, characterised in that the first engagement means (63) pivotally engages the skip (2) about a first pivot axis, the mounting means (46) pivotally mounts the lifting member (45) about a second pivot axis, the first pivot axis and second pivot axis being spaced apart from each other and parallel to each other, and second engagement means (70) are mounted on the lifting member (45) for selectively engaging the skip (2) rigidly with the lifting member (45) so that as the lifting member (45) pivots from the loaded to the unloaded position the skip (2) is tipped for discharging contents thereof.

6. A vehicle as claimed in Claim 5 characterised in that the first engagement means (63) and second engagement means (70) are spaced apart from each other, and means (56) for pivoting the lifting framework (45) from the loaded position to the unloaded position is provided.

7. A vehicle as claimed in Claim 5 or 6 characterised in that the mounting means (46) comprises a pair of spaced apart side frames (46) mounted one on each side of the chassis (25), the side frames (46) extending forwardly from a position adjacent the rear end (29) of the chassis (25), and the lifting member (45) is provided by a lifting framework (45) which partly embraces the skip (2), the lifting framework (45) comprising a pair of spaced apart side members (53) for accommodating the skip (2) therebetween, the side members (53) being joined at one end by a cross member (54), the other end of each side member (53) pivotally engaging a respective side frame (46) about the second pivot axis adjacent the rear of the side frames (46), the second pivot axis being transverse of the chassis (25) and the lifting framework (45) extending in a generally upward, forward direction relative to the chassis (25) in the loaded position, and in a generally rearward direction in the unloaded position.

8. A vehicle as claimed in Claim 7 characterised in that the second engagement means (70) is provided by a latch (70) mounted on the cross member (54) selectively movable into and out of engagement with a corresponding receiver (21) in the skip (2).

9. A vehicle as claimed in Claim 7 or 8 characterised in that the side members (53) are cranked (52) intermediate the first engagement means (63) and the cross member (54) so that the cross member (54) in use coincides with an upper rim (11) of the skip (2), and the first engagement means (63) is provided by a pair of engagement members (63), an engagement member (63) extending from a respective side member (53) at an acute angle thereto to define with the side member (53) a recess (65) for reception of a support means (20) on the skip (2).

10. In combination a vehicle (1) as claimed in any of Claims 5 to 9 and a skip (2) comprising a base (6) and generally upwardly extending side walls (7,8,9), the skip (2) having an upper open mouth (12), and support means (20) being provided on a pair of opposite side walls (7) for engaging the first engagement means (63), and receiver means (21) is provided on the skip (2) for receiving the second engagement means (70).

Fig 1

Fig 9

Fig 10

Fig 2

Fig 3

Fig 4

Fig 5

Fig 6

Fig 7

Fig 11

Fig 8